**Europäisches Patentamt**

**European Patent Office**

**Office européen des brevets**

(19)

(11) Publication number: **0 115 884**
**B1**

(12) # EUROPEAN PATENT SPECIFICATION

(45) Date of publication of patent specification: **07.01.88**

(51) Int. Cl.⁴: **G 01 N 27/30**

(21) Application number: **84200022.6**

(22) Date of filing: **06.01.84**

(54) Reference electrode asssembly.

(30) Priority: **07.01.83 NL 8300057**

(43) Date of publication of application:
**15.08.84 Bulletin 84/33**

(45) Publication of the grant of the patent:
**07.01.88 Bulletin 88/01**

(84) Designated Contracting States:
**DE FR GB IT NL**

(56) References cited:
**AT-A- 363 062**
**FR-A-2 203 521**
**GB-A-2 023 845**
**NL-A-7 116 613**
**US-A-3 705 089**

**Reference Electrodes, David J.G.IVES et al.,**
**1961, Academic Press, page 179**
**P.M. van der Velden, thesis, 1976, pages 19 and**
**68, 69**

(73) Proprietor: **Sentron v.o.f.**
**Oosteinde 8**
**NL-9301 LJ Roden (NL)**

(72) Inventor: **Van der Velden, Paulus Martinus**
**Bronkhorststraat 22**
**NL-7555 MK Hengelo (NL)**

(74) Representative: **Smulders, Theodorus A.H.J.**
**et al**
**Vereenigde Octrooibureaux Nieuwe Parklaan**
**107**
**NL-2587 BP 's-Gravenhage (NL)**

Courier Press, Leamington Spa, England.

## Description

The invention relates to a reference electrode assembly comprising an ion-specific electrode, which is in contact with an electrolyte as the electrode potential causing agent, both the ion-specific electrode and the electrolyte being maintained in a supporting member having an opening, with the bulk of the electrolyte being separated from direct contact with the environment of the reference electrode.

Such a reference electrode assembly is known from NL-A-7 116 613. The prior reference electrode consists of a metallic conductor made of pure cadmium, inserted in an electrochemical stable electrolyte containing cadmiumsulphate and with pH regulating action so being a reference electrode of the first kind, all enclosed in a house the bottom of which is provided with a porous plug enabling a quick electrolyte contact and having a precised diffusivity. The said prior reference electrode is meant to be used for measuring the electrode potentials of primary and secondary cells as well as of batteries such as a lead accumulator battery.

Microelectrode instruments are currently used for continuous in vivo measurement of physiologically important parameters such as pH and pK. In the application of ion specific, active electrodes of this type, it is typically necessary to have a so-called reference electrode available, with respect to which the potential of the active electrode is measured. Reference electrodes should provide a steady reference potential within the electrochemical circuit.

It is accordingly a general object of the present invention to provide a new type reference electrode that is especially suitable for in vivo monitoring or measurement of body fluids, such as blood.

Another object of this invention is to provide a reference electrode, which may be used as a disposable reference electrode, and which may include applying same directly to the bloodstream for several days in combination with the active electrode.

According to the invention there is provided a reference electrode of the type mentioned in the introductory part hereinabove, characterized in that said ion-specific electrode is a hydrogen ion-specific electrode (6) being encapsulated within a polymer matrix (9), the bulk of said polymer matrix having an open cell structure containing the electrolyte and its surface being such as to form a barrier preventing a free and open connection to the environment of the reference electrode (4).

AT—A—363,062, it is true, describes a reference electrode assembly having an electrode which is encapsulated by a polymer matrix that is a gel prepared from a polyacrylamide, a polymethacrylamide, a polyvinyl alcohol, a polyacrylate, a polymethacrylate, polyvinylpyrrolidone or hydroxy ethyl acetate. Such reference electrode assemblies are described to be utilizable as microelectrodes suitable for direct measurement in living cells, it being possible to incorporate a salt or mixture of salts into its polymer matrix. However, this prior reference electrode is restricted to a reversible electrode of the second kind as is an electrode of the Ag/AgCl-type and is, therefore, not based on an electrode reaction comprising hydrogen ions. Furthermore, the salts to be incorporated into the polymer matrix are neutral salts. Accordingly, such reference electrode assemblies exhibit undesirable sensitivity to pH variations in the liquid to be measured.

Characteristic for a reversible electrode of the second kind to which AT—A—363,062 is restricted such as the well-known AG/AgCl electrode or the calomel electrode as, for example is described in the book "Reference electrodes", edited by David J. G. Ives et al. 1961, Academic Press, page 179, is that it comprises a solid phase in the form of a sparingly soluble salt in equilibrium with a saturated solution of said salt participating in the elecrode reaction. The reference electrode according to AT—A—363,062 is not meant to be a new type reference electrode but to offer a new solution for the problem how to obtain a good electrical contact between the electrolyte of the reference electrode and the liquid to be analyzed.

In connection herewith the earlier mentioned polymer materials are used in the form of a gel, no other structural properties of the gel being mentioned. In contradistinction to AT—A—363,062, an object of the present invention is to provide a new reference electrode that is suitable for in vivo measurements.

In GB—A—2 023 845 there is furthermore disclosed the use of an iridium/iridiumoxide electrode within the framework of an electrochemical measuring circuit comprising a special combination of a first and second electrode. Said electrochemical system generally serves the determination of the proportion of a polar liquid in a nonpolar liquid or of moisture in a powder, for the purpose of which both electrodes of the electrochemical system are placed in the material to be investigated and the voltmeter deflections are compared with those ones obtained with standard mixtures. If according to a special embodiment a reference electrode is used within this electrochemical system, the use of an Ag/AgCl electrode is proposed.

US—A—3 705 089 concerns a reference electrode comprising a supporting member in the form of a flexible hollow tube in which a wire electrode is maintained. The wire electrode, however, should specifically be an Ag/AgCl electrode. The electrolyte is maintained in the tube in the form of a gelled equitransferant salt. The liquid junction of the electrolyte of the reference electrode with the electrolyte in which the said reference electrode is to be placed can be renewed by cutting of a small segment of the open end of the tube. Finally FR—A—2 203 521 is also related to a reference electrode, the electrode means of which, however, is a reversible electrode of the second kind. The connection between the electrolyte containing room and the measuring liquid is via a plug which may consist of a cellulose ester with a smooth surface. The smooth surface of the plug may be realised by means of a treatment of the surface through lamination, compression and/or heat treatment.

The reference electrode according to the invention is not based on a reversible electrode of the second kind. The solid phase of the electrode means does not comprise a sparingly soluble salt but is of a type which is specific sensitive to hydrogen ions which is surprising taking into account the object of the invention namely to provide a new reference electrode assembly which is suitable for in vivo measurements such as blood, which, as is well-known, is a body fluid with varying hydrogen ion activity.

By using according to the invention a polymer matrix, the bulk of which having an open cell structure which contains a liquid as an electrode potential causing agent and its surface being such that it forms a barrier preventing a free and open connection to the environment of the reference electrode, the electrolyte, containing the hydrogen ions being involved in the electrode process so as to effect a constant electrode potential, is encased in the open cells of what also may be called a skinned or asymmetric polymer matrix.

Skinned or asymmetric polymer material is known per se as may be derived from, for example, P.M. van der Velden "New membranes for hyperfiltration processes; synthesis, properties and applications", thesis, November 1976, for example, page 19 and pages 68 and 69.

Summarizing the advantages of the reference electrode assembly according to the invention these are the possibility to apply the said reference electrode safely for in vivo measurements of, for example, human blood, notwithstanding the fact, that knowing that blood is a body fluid which by definition has a variable pH this possibility is achieved with the electrode being specifically sensitive to hydrogen ions. Moreover the reference electrode offers the possibility to be combined with an active electrode half cell providing a complete electrochemical pH measuring circuit which exhibits a significantly reduced temperature sensitivity, as will be elucidated herein below.

The combination of an electrode means specifically sensitive to hydrogen ions and a special structured polymer material as container for an electrolyte containing hydrogen ions for the construction of the reference electrode according to the invention offers additional advantages. For in the use of a polymer material which is a weak polyelectrolyte containing anionic groups and therefore having a strong affinity to hydrogen ions and/or the use of a buffer solution as the electrolyte, the insensitiveness of the reference electrode potential regarding in-diffusing hydrogen ions originating from the measuring liquid such as blood, can be adjusted and controlled.

The present invention will be further elucidated by means of the drawings, wherein:

Figures 1a and 1b each give plots of the pH of several solutions being measured versus the voltage deflection generated by a pH-sensitive ion selective field effect transistor (ISFET) having different membranes;

Figure 2 provides plots of the pH of several solutions being measured versus the potential of the measuring circuit of a pH-sensitive Ir/IrO electrode having different membranes;

Figure 3 is a sectional view of a reference electrode assembly in accordance with this invention;

Figure 4 reports plots of the potential of reference electrodes generally according to Figure 3 versus time;

Figure 5 provides plots of variations of electrode potentials of various reference electrodes versus time;

Figure 6 provides plots of the potential of buffered reference electrodes versus time;

Figure 7 is a sectional view of a reference electrode assembly according to this invention as used in in vivo testing of blood; and

Figure 8 plots results of in vivo testing with the reference electrode assembly of Figure 7, the plots being of time versus pH variation of the blood (curve "a") and versus the measured electrode potential (curve "b").

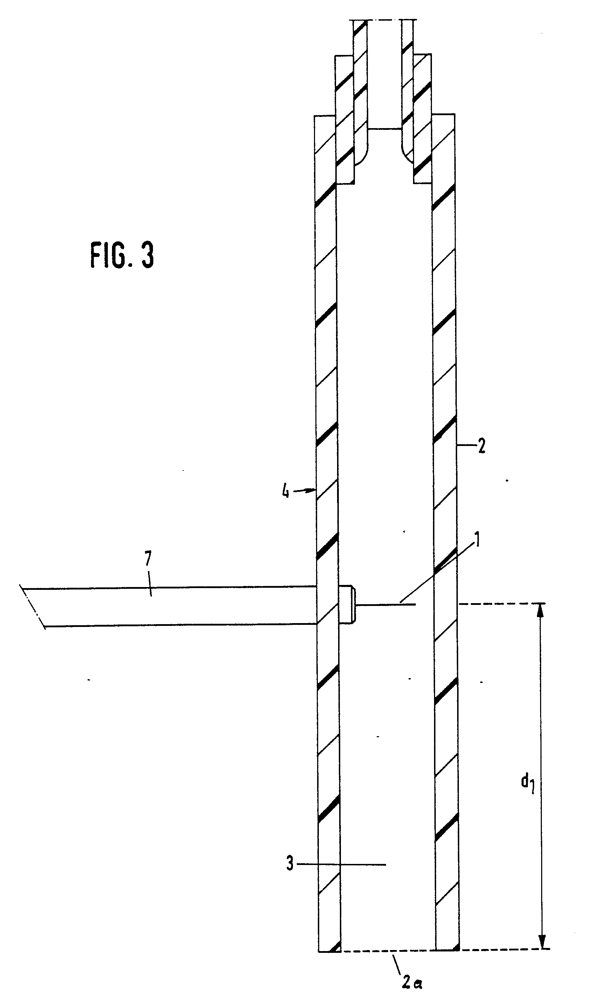

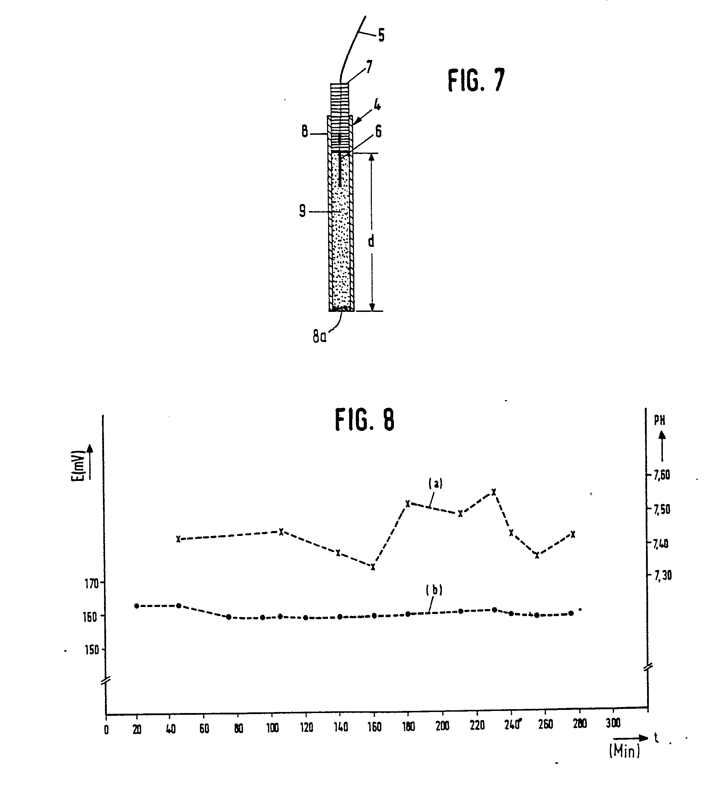

The reference electrode assembly according to this invention is generally designated as 4 in Figure 3 and in Figure 7. Included is a wire electrode 1 or 6 and a support member such as tube 2 or 8 which generally encloses a polymeric matrix 3 or 9, within which the wire electrode 1 or 6 is imbedded. Typically, the wire electrode 1 or 6 will be mounted by means of an insulation element 7 or the like and will be in electrical engagement with a current conducting wire 5, which may be incorporated within a known type of measuring or monitoring circuit (not shown).

Support member 2 or 8, in order to facilitate in vivo applications in a generally customary manner, includes an open end 2a or 8a by which blood or other fluid enter the electrode assembly 4. Such blood or fluid diffuses from the open end 2a and 8a, through the polymeric matrix 3 or 9, and to the wire electrode 1 or 6. Variations in diffusion times can be effected by modifying the distance "d".

In an important aspect of this invention, the electrode 1 or 6 is of a material exhibiting an electrode reaction which is specific with respect to particular ions such as hydrogen ions, such that the concentration of the specific ions determines the electrode potential. These ion-specific electrodes exhibit potentials with respect to the solution within which they are in contact and that are primarily governed by one particular type of ion, such as the hydrogen ion. Examples of such ion-specific electrodes which may be utilized within the reference electrode assembly 4 according to this invention are an iridium/iridium oxide electrode (Ir/IrO electrode) or an ion selective field effect transistor (ISFET). A preferred embodiment of the reference electrode according to this invention is characterized by an iridium/iridium oxide pH wire electrode as a hydrogen ion-specific electrode. Such an electrode also fills a biocompatibility requirement which is important for in vivo applications in respect to the ion specific electrode according to the invention.

By encapsulating the electrode according to the invention with a polymer matrix 3 or 9 having an open-pore bulk structure, the liquid in the open pores of the polymer matrix, which acts as the agent for the standard potential, is immobilized. This makes convective liquid transport impossible. For this reason, ion transport through the polymer matrix from, for example, the bloodstream to the electrode (and vice versa) is believed to be only possible by means of diffusion. Because diffusion processes are very slow, mass transport may last about ten hours up to several days, dependent on the length of the diffusion path.

It is important that the polymer matrix 3 or 9 include or be built up from a material having a strong affinity for hydrogen ions, in order that the transport of the hydrogen ions through the polymer matrix will be influenced. Suitable materials in this regard are those that are weak polyelectrolytes, such as cellulose acetate. It is preferred that the wire electrode 1 or 6 be encapsulated by a polymer matrix 3 or 9 that is prepared from cellulose acetate, which is also advantageous for in vivo uses because of its biocompatibility.

In addition, the presence of a buffer solution in the pore structure also influences said hydrogen ion transport. Phosphate buffer solutions are suitable in this regard. Also important for practical application as a reference electrode is that the water-containing polymer matrix is in equilibrium with an isotonic solution such as a physiological phosphate buffer solution.

Based on the aforementioned aspects and mechanisms of the polymer matrix, the period of time during which the reference electrode according to the invention may be applied in practice is dependent, among other things, on the length of the electrode, on the type of the polymer matrix, and on its structure. As such, the reference electrode according to the invention is adjustable as desired to meet particular needs and is especially suitable to be used within disposable medical devices and articles.

An additional advantage of the reference electrode assembly according to the invention, when it is used as a reference electrode in a complete pH measuring system provided with an iridium/iridium oxide pH wire electrode, is that it exhibits a significantly reduced temperature sensitivity when compared, for example, with a known pH measuring system that includes a silver/silver chloride (Ag/AgCl) reference electrode in association with the iridium/iridium oxide pH wire electrode.

## Example I

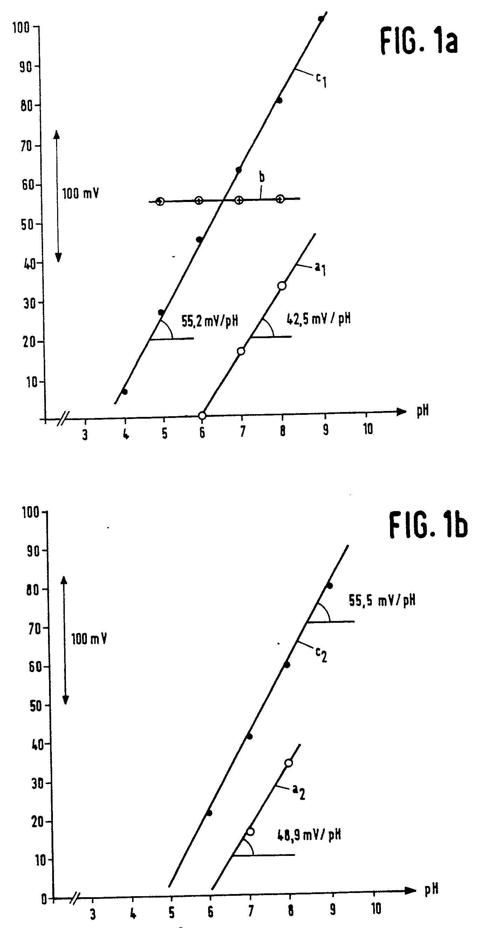

A pH-sensitive ion selective field effect transistor (ISFET) was utilized in testing for the determination of the influence of the type of material of the polymer matrix on the pH-sensitivity of a pH-sensitive indicator such as an ISFET. A series of Merck buffer solutions having pH values varying between 3 and 9 were contacted with the sensor which was tested without a membrane (plots $a_1$ and $a_2$ in Figures 1a and 1b) as well as provided with a cellulose acetate membrane (plot b in Figure 1a) or a cellulose membrane (plots $c_1$ and $c_2$ in Figures 1a and 1b). The last mentioned membrane was obtained by hydrolizing a previously applied cellulose acetate membrane in a 1.0 weight percent NaOH solution for 30 minutes at 60°C.

The results of the measurements, obtained with two ISFET's are graphically shown in Figure 1a and Figure 1b. Along the Y-axis the meter's deflection is plotted in scale divisions, the scale-value of which is presented in mV, while the pH of the buffer solution tested is plotted along the X-axis. Both the cellulose membrane and the cellulose acetate membrane were homogenous membrane materials, obtained after an evaporation time of 30 minutes. The average pH-sensitivity of the pH-ISFET without a membrane was approximately between 42.5 mV and 48.9 mV for each pH unit that the tested solution varied, which was generally the same as the pH-sensitivity of the pH-ISFET having a cellulose membrane. When provided with a cellulose acetate membrane, however, the sensitivity of the sensor for pH-changes in the pH-range of between 5 and 8 had completely disappeared (Figure 1a, plot b).

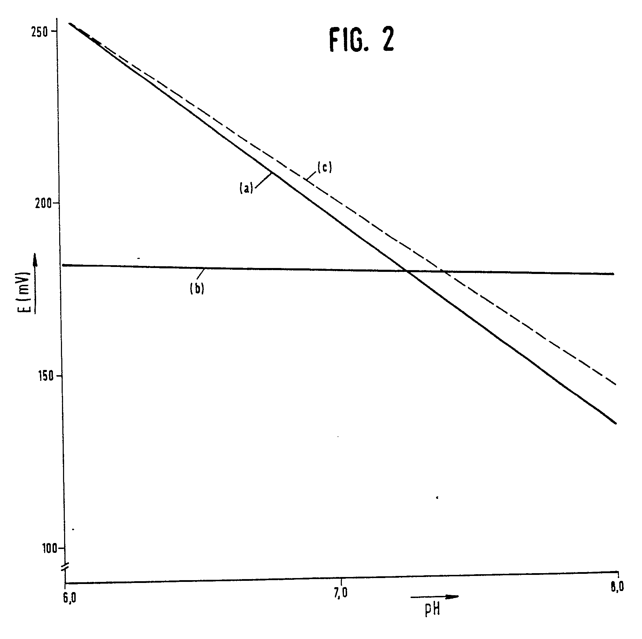

Analogous experiments were carried out with a pH-sensitive Ir/IrO electrode, provided with a homogeneous layer of cellulose acetate. With these experiments, results were obtained which were quite analogous to those obtained with the earlier-described experiments carried out with the pH-sensitive ISFET. These measuring results are presented in Figure 2. Along the Y-axis, the potential E of the measuring circuit is plotted in mV, when a saturated calomel-electrode is used as the reference electrode. Along the X-axis, the pH values of the particular experimental solutions monitored are plotted. Graph a relates to the pH-sensitive Ir/IrO electrode according to the invention without a membrane, graph b to the electrode provided with a cellulose acetate membrane, and graph c to the electrode provided with a cellulose membrane.

From these results one may calculate and conclude that a cellulose acetate membrane has the ability to reduce the pH-sensitivity of the reference electrode up to more than 85% when compared with a hydrogel-like cellulose membrane, these tests being conducted within the pH range of 6 to 8, which is the physiologically important pH range for blood analysis procedures.

## Example II

Four reference electrodes, which in this and following examples are referred to as electrodes A—D, were constructed based on the design as shown in Figure 3, which is in accordance with the present invention. The electrode 1, which was an Ir/IrO electrode, was radially fitted within the open ended polyvinylchloride tube 2, which is provided with a polymer matrix 3 of cellulose acetate. The distance d between the Ir/IrO electrode and the matrix-surface was varied for each different electrode. In electrode A, d was 1.0 cm; in electrode B, d was 2.0 cm; in electrode C, d was 3.0 cm; and in electrode D, d was 4.0 cm.

The polymer matrix was applied by filling up each electrode with a 20 weight percent cellulose acetate solution in acetone and then placing the assembly in demineralized water, with the result that a cellulose acetate matrix was formed by coagulation. After the electrodes had been maintained during 117 hours in regularly renewed demineralized water, these reference electrodes were placed in a phosphate buffer with a pH of 7.85. Starting at this moment ($t_1 = 0$ hours) the potentials of the reference electrodes A—D were continuously measured with reference to a saturated calomel reference electrode. All such measurements took place in a measuring arrangement, which was thermostated at 37°C.

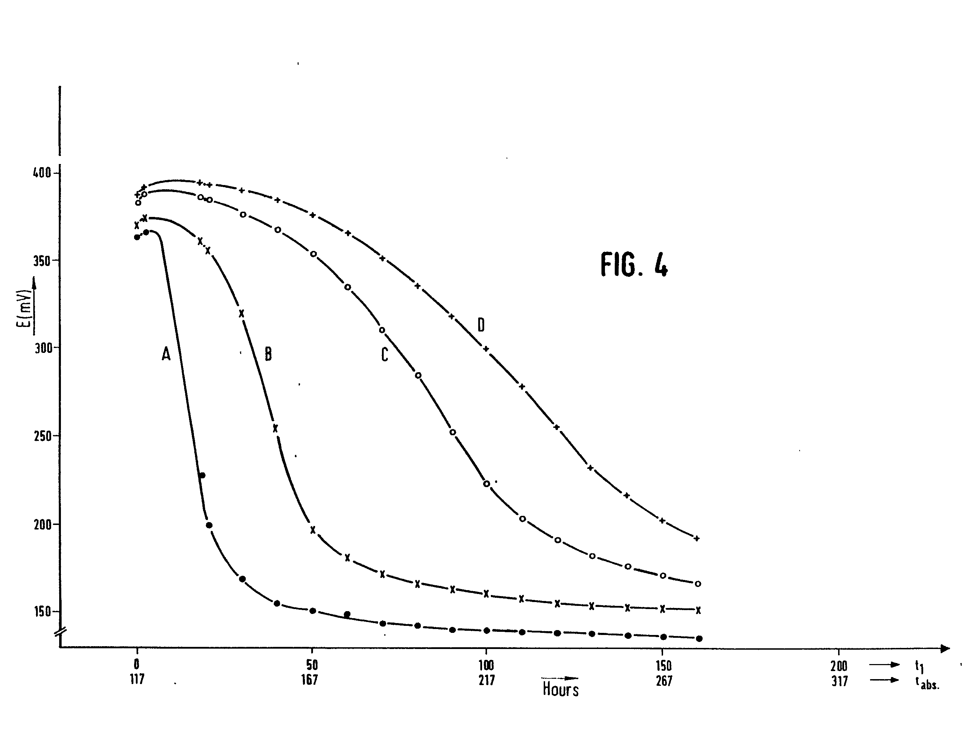

The results are graphically presented in Figure 4. Along the Y-axis the potential in mV is plotted, having used the saturated calomel electrode as the reference electrode, while along the X-axis the measuring period in hours is plotted, calculated either from the beginning of the treatment of the electrodes by regularly renewed demineralized water as the starting point ($= t_{abs}$) or calculated from the moment when measurement of the reference electrode potential was initiated ($= t_1$). The potential of the electrodes A—D decreased with time, as was expected, which decrease began at a later.time as the diffusion path length "d" increased, this diffusion path length being the distance between the electrode and the open end of the tube.

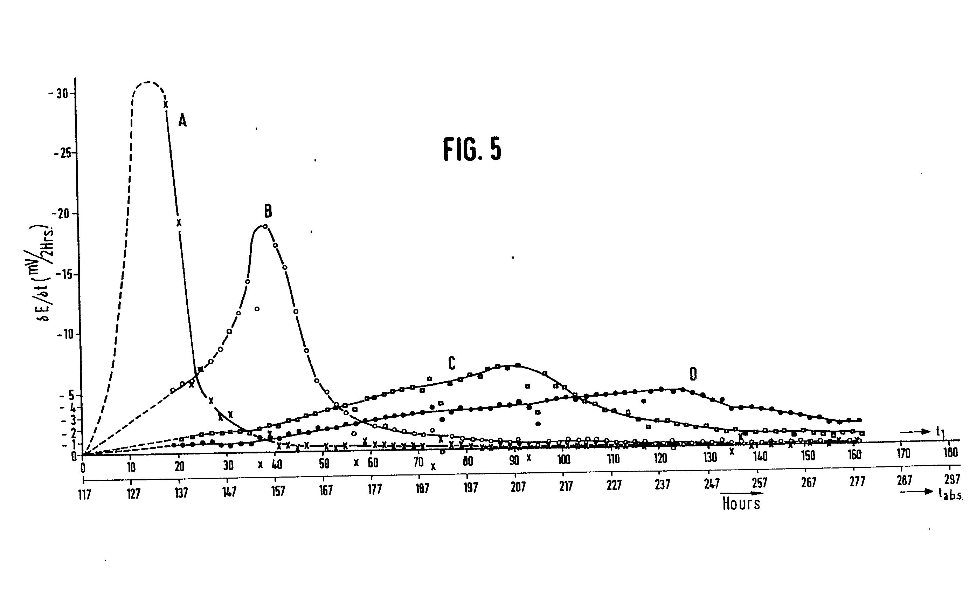

Figure 5 shows the variation of the electrode potentials (reported in mV per two hours). These values are plotted along the Y-axis while along the X-axis the same divisions as in Figure 4 are plotted. From these values, one may conclude, that the diffusion front passes the Ir/IrO reference electrode A after 15 hours, the reference electrode B after 38 hours, the reference electrode C after 90 hours and the reference electrode D after 125 hours. From this it may be concluded that the ion-transport through the polymer matrix indeed is mainly diffusion-controlled.

From Figure 5, one may further conclude that, if the solution to be analyzed undergoes a pH change of more than 3 pH units, the reference electrode according to this example, treated with demineralized water and with d = 4 cm, shows a variation of the potential of less than 1 mV per hour during the first 55 hours of its use at 37°C.

## Example III

After continuously monitoring the electrodes A—D from Example II (with respect to a saturated calomel electrode) in a phosphate buffer solution having a pH of 7.85, the pH of the solution was reduced to 6.81. This experiment is different from that of Example II because the sudden pH-variation is less and because of the presence of a phosphate buffer solution in the polymer matrix when the pH variation was started.

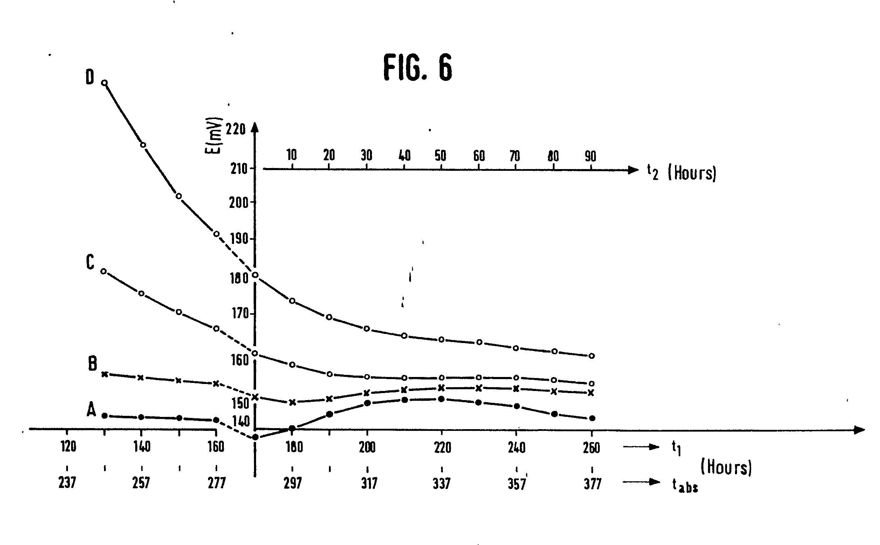

The variation of the electrode potential E of the electrodes A, B and C was less than mV per hour during a period of more than 100 hours. See Figure 6, wherein $t_2$ along the X-axis represents time in hours, calculated from the moment of the stepwise change of the pH of the measuring liquid from 7.85 to 6.81. The initially larger potential variation of the electrode D is the consequence of the instability of the potential after $t_1 = 167$ hours. Starting with a pH electrode sensitivity of 59 mV per pH unit, this fact means that when applied as a disposable reference electrode, this electrode has a maximum drift of 0.008 pH units per hour, if the pH of the solution being measured is varying stepwise for 1 pH unit and if the electrode potential is stable on the moment of the pH variation.

## Example IV

In an in vivo experiment, an electrode according to the embodiment of the invention as shown in Figure 7 was applied to animals. Electrode 4 was composed of an Ir/IrO wire electrode 6, being mounted in element 7 that was made of silastic rubber. The tube 8 was made of polyvinylchloride, and it was filled with a polymer matrix 9 prepared of cellulose acetate. The distance d was 3 cm.

For the in vivo experiment, the electrode was built in a conventional flow-through cell (not shown) such that the end of the tube 8 made contact with the blood in the flow-through cell. This cell was taken up in an extra-corporal circulation of the blood of a dog. The pH of the blood was varied through external influence. The electrode-potential E was measured with respect to a saturated calomel electrode, which for this experiment was applied under the skin of the test animal.

The results of a representative experiment are shown in Figure 8; wherein the Y-axis represents the measured electrode potential E in mV with respect to a saturated calomel electrode and the pH of the blood, respectively, while along the X-axis time t in minutes is plotted. Plot (a) shows the pH-variation and plot (b) the measured electrode potential. With a variation of the pH between the values 7.34 and 7.57 during a period of time of more than four hours, the standard deviation of the used electrode combination was 1.1 millivolt.

It is to be appreciated that this invention can be embodied in various forms and therefore is to be construed and limited only by the scope of the appended claims.

## Claims

1. A reference electrode assembly comprising an ion-specific electrode, which is in contact with an electrolyte as the electrode potential causing agent, both the ion-specific electrode and the electrolyte being maintained in a supporting member having an opening, with the bulk of the electrolyte being separated from direct contact with the environment of the reference electrode, characterized in that said ion specific electrode is a hydrogen ion-specific electrode (6) being encapsulated within a polymer matrix (9), the bulk of said polymer matrix having an open cell structure containing the electrolyte and its surface being such as to form a barrier preventing a free and open connection to the environment of the reference electrode (4).

2. The reference electrode assembly according to claim 1, characterized in that the hydrogen ion-specific electrode (6) is an iridium/iridium oxide wire electrode.

3. The reference electrode assembly according to claims 1—2, characterized in that the pH wire electrode, is encapsulated in a blood compatible polymer matrix.

4. The reference electrode assembly according to claims 1—3, characterized in that the polymer matrix (9) is a weak polyelectrolyte.

5. The reference electrode assembly according to claims 1—4, characterized in that the polymer matrix (9) is a cellulose acetate matrix.

6. The reference electrode assembly according to claims 1—5, characterized in that the polymer matrix (9) includes a pH buffering material.

## Patentansprüche

1. Referenzelektrodenanordnung, versehen mit einer ionenspezifischen Elektrode, die mit einem Elektrolyten als Elektrodenpotentialerzeuger in Kontakt steht, wobei sowohl die ionenspezifische Elektrode wie der Elektrolyt in einem mit einer Oeffnung versehenen Tragstab enthalten sind und die Elektrolytmasse von unmittelbarem Kontakt mit der Umgebung der Referenzelektrode gesondert ist, dadurch gekennzeichnet, dass die ionenspezifische Elektrode eine wasserstoffionenspezifische Elektrode (6) ist, die in eine Polymermatrix (9) eingekapselt ist, wobei die Masse der Polymermatrix eine den Elektrolyten enthaltende offene Zellenstruktur aufweist und deren Oberfläche derart ist, dass eine Barriere gehildet wird, die eine freie und offene Verbindung mit der Umgebung der Referenzelektrode (4) verhindert.

2. Referenzelektrodenanordnung nach Anspruch 1, dadurch gekennzeichnet, dass die wasserstoffionenspezifische Elektrode (6) eine Iridium/Iridiumoxid-Drahtelektrode ist.

3. Referenzelektrodenanordnung nach Ansprüchen 1—2, dadurch gekennzeichnet, dass die pH-Drahtelektrode in eine mit Blut verträgliche Polymermatrix eingekapselt ist.

4. Referenzelektrodenanordnung nach Ansprüchen 1—3, dadurch gekennzeichnet, dass die Polymermatrix (9) ein schwacher Polyelektrolyt ist.

5. Referenzelektrodenanordnung nach Ansprüchen 1—4, dadurch gekennzeichnet, dass die Polymermatrix (9) eine Celluloseacetatmatrix ist.

6. Referenzelektrodenanordnung nach Ansprüchen 1—5, dadurch gekennzeichnet, dass die Polymermatrix (9) ein pH-Puffermaterial enthält.

## Revendications

1. Un group d'électrode de référence comprenant une électrode ion-spécifique étant en contact avec un électrolyte comme agent causant le potentiel d'électrode, tant l'électrode ion-spécifique et l'électrolyte étant maintenus dans un organe de support ayant un orifice, et la majeure partie de l'électrolyte étant séparée de contact direct avec l'environnement de l'électrode de référence, caractérisé en ce que ladite électrode ion-spécifique est une électrode ion-spécifique à hydrogène (6) étant enveloppée dans une matrice polymérique (9), la majeure partie de ladite matrice polymérique ayant une structure à cellule ouverte contenant l'électrolyte, sa surface étant de la sorte à former une barrière excluant une connexion libre et ouverte à l'environnement de l'électrode de référence (4).

2. Le groupe d'électrode de référence selon la revendication 1, caractérisé en ce que l'électrode ion-spécifique à hydrogène (6) est une électrode à fil en iridium/oxyde d'iridium.

3. Le groupe d'électrode de référence selon les revendications 1—2, caractérisé en ce que l'électrode en fil pH est enveloppée dans une matrice polymérique compatible avec du sang.

4. Le groupe d'électrode de référence selon les revendications 1—3, caractérisé en ce que la matrice polymérique (9) est un polyélectrolyte faible.

5. Le groupe d'électrode de référence selon les revendications 1—4, caractérisé en ce que la matrice polymérique (9) est une matrice en acétate de cellulose.

6. Le groupe d'électrode de référence selon les revendications 1—5, caractérisé en ce que la matrice polymérique (9) comprend un matériau tampon pH.

FIG. 1a

100 mV

$c_1$

b

$a_1$

55,2 mV/pH

42,5 mV/pH

pH

FIG. 1b

100 mV

55,5 mV/pH

$c_2$

$a_2$

48,9 mV/pH

pH

FIG. 2

FIG. 3

FIG. 4

FIG. 5

FIG. 6

FIG. 7

FIG. 8